(19) Europäisches Patentamt / European Patent Office / Office européen des brevets

(11) **EP 1 862 959 A1**

(12) **DEMANDE DE BREVET EUROPEEN**

(43) Date de publication:
**05.12.2007 Bulletin 2007/49**

(51) Int Cl.:
*G06Q 10/00* (2006.01)  *H04L 29/08* (2006.01)

(21) Numéro de dépôt: **07109147.4**

(22) Date de dépôt: **29.05.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **30.05.2006 FR 0651961**

(71) Demandeur: **FRANCE TELECOM**
**75015 Paris (FR)**

(72) Inventeurs:
• **Le Huerou Emmanuel, Emmanuel**
  **22700, SAINT QUAY PERROS (FR)**
• **Pontiggia, Michaël**
  **22300, LANNION (FR)**
• **Coupe, Patrice**
  **TOKYO Tokyo 150-0035 (JP)**

(74) Mandataire: **Ledey, Michel et al**
**France Télécom,**
**R&D/PIV/PI,**
**38-40 Rue du Général Leclerc**
**92794 Issy Moulineaux Cedex 9 (FR)**

(54) **Système de communication pour la création collaborative à distance de contenus multimédias**

(57) Système de communication pour la création collaborative à distance d'un contenu multimédia final (CMf) réalisé à partir d'une pluralité de contenus multimédia élémentaires (CM(i,j)).

Selon l'invention, ledit système comprend :
- un module (13) de génération d'au moins un scénario pour ledit contenu multimédia final, ledit scénario étant composé d'une structure arborescente d'au moins une séquence multimédia,
- une pluralité de terminaux (Ti), un terminal étant apte à émettre au moins un contenu multimédia élémentaire (CM(i,j)) constitué de données multimédia (I(i,j), a(i,j)) et de métadonnées (D(i,j)) comprenant un indicateur concernant une séquence multimédia à laquelle se rapporte ledit contenu multimédia élémentaire,
- un serveur (14) de réalisation dudit contenu multimédia final (CMf) par traitement des contenus multimédia élémentaires (CM(i.j)) émis par les terminaux (Ti), conformément à ladite structure arborescente et selon une loi de montage donnée.

Application aux télécommunications et aux activités audiovisuelles.

Fig.2

EP 1 862 959 A1

## Description

La présente invention concerne un système de communication pour la création collaborative à distance d'un contenu multimédia final réalisé à partir d'une pluralité de contenus multimédia élémentaires.

L'invention trouve une application particulièrement avantageuse dans le domaine des télécommunications et des activités audiovisuelles.

Aujourd'hui, il est devenu facile de produire des contenus multimédia par montage de séquences disponibles à partir d'une multitude d'équipements audiovisuels communicants. L'assemblage des séquences obtenues est réalisé au moyen de logiciels de montage vidéo qui sont largement répandus sur les terminaux de type ordinateur personnel (PC) et que l'on retrouve même sur les terminaux mobiles, permettant ainsi de réaliser des montages simplifiés sur ce type de terminal.

D'autre part, le haut débit, fixe ou mobile, apporte la possibilité de transmettre sur un grand nombre de terminaux des contenus multimédia de bonne qualité, qui deviennent aisément accessibles et consultables. Les vidéos produites, par exemple sur un terminal mobile, peuvent donc être facilement envoyées par son auteur à un destinataire, par MMS, courrier électronique, etc., ou mise en ligne sur un site web personnel (« blog ») par exemple. Par ailleurs, avec les débits de données actuels, il devient possible de consulter sur un terminal mobile des contenus vidéo en ligne.

Enfin, un caméraphone par exemple permet d'alimenter un « blog » en photo et vidéo. Le « blog » est par essence collaboratif et asynchrone, car il permet publier des contenus en provenance de différentes personnes au moyen de liens externes. Le « vidéo blog » peut donc pointer des contenus vidéo produits par différents utilisateurs.

Cependant, ces techniques connues de réalisation de contenus multimédia à partir de contenus élémentaires présentent toutes des inconvénients.

En effet, les logiciels de montage vidéo s'inscrivent dans un contexte individuel et non collaboratif et nécessitent généralement une phase d'apprentissage en raison de leur complexité.

Pour sa part, la réalisation d'un film à partir de plusieurs sources et par plusieurs réalisateurs/contributeurs oblige à travailler sur le même lieu et à visualiser les mêmes écrans.

Dans le cas des « blogs », chaque contenu est l'oeuvre d'un seul auteur. La consultation d'un « blog » n'est que la consultation successive des contenus pris séparément.

On constate donc qu'il n'existe aucun système, simple à mettre en oeuvre, permettant à un groupe de personnes de produire à distance un contenu multimédia unique composé des contributions élémentaires des membres du groupe.

Aussi, un problème technique à résoudre par l'objet de la présente invention est de proposer un système de communication pour la création collaborative à distance d'un contenu multimédia final réalisé à partir d'une pluralité de contenus multimédias élémentaires, qui permettrait d'apporter une solution d'ensemble aux exigences soulevées par la production en mode collaboratif de contenus multimédia par plusieurs personnes réparties sur des lieux différents, comme la disponibilité et la communication entre les participants, l'accès et le partage des contenus élémentaires, ainsi que leur exploitation et leur mise en forme.

Une solution au problème technique posé consiste, selon la présente invention, en ce que ledit système comprend :

- un module de génération d'au moins un scénario pour ledit contenu multimédia final, ledit scénario étant composé d'une structure arborescente d'au moins une séquence multimédia,
- une pluralité de terminaux, un terminal étant apte à émettre au moins un contenu multimédia élémentaire constitué de données multimédia et de métadonnées comprenant un indicateur concernant une séquence multimédia à laquelle se rapporte ledit contenu multimédia élémentaire,
- un module de réalisation dudit contenu multimédia final par traitement des contenus multimédia élémentaires émis par les terminaux, conformément à ladite structure arborescente et selon une loi de montage donnée.

Ainsi, le système conforme à l'invention assure un certain nombre d'opérations de base dans le processus de création collaborative consistant à:

- définir un scénario sous la forme d'une arborescence de séquences multimédia dans lesquelles viendront se placer les contributions élémentaires des différents participants,
- recevoir, de manière asynchrone et en fonction de la disponibilité des participants, lesdites contributions élémentaires et les classer dans l'arbre des séquences selon l'indicateur attaché à chaque contribution et contenu dans les métadonnées,
- réaliser le contenu final à partir des contenus élémentaires en tenant compte de leur répartition dans les séquences et de la loi de montage retenue.

Deux possibilités son offertes par l'invention concernant ledit indicateur et son rattachement à une séquence multimédia :

- soit, ledit indicateur concerne une séquence multimédia préalablement existante dans la structure arborescente,
- soit ledit indicateur concerne une séquence multimédia nouvelle, ledit module de génération étant apte à ajouter ladite séquence à la structure arborescente.

En d'autres termes, ledit indicateur peut associer un contenu élémentaire à une séquence déjà existante ou à une séquence absente de la structure arborescente. Dans ce dernier cas, le module de génération ajoute de manière dynamique cette dernière séquence à la structure arborescente.

Selon un mode de réalisation, ladite loi de montage consiste en une concaténation des contenus multimédia élémentaires d'une même séquence de la structure arborescente.

Selon un autre mode de réalisation, ladite loi de montage consiste en une sélection d'un seul contenu multimédia élémentaire dans une séquence de la structure arborescente. Le contenu multimédia retenu peut être le dernier reçu ou celui considéré comme le meilleur pour la séquence par au moins un participant. Cette opinion est transmise au système pour l'inclure dans la loi de montage si, comme le prévoit l'invention, lesdites métadonnées contiennent des informations concernant la constitution de ladite loi de montage.

Selon encore un autre mode de réalisation, ladite loi de montage consiste en l'application de transformations aux contenus multimédia élémentaires d'une même séquence de la structure arborescente. On entend ici par « transformations » des traitements appliqués à des contenus élémentaires isolément, comme un ralenti ou la suppression du son, ou à un ensemble de contenus élémentaires, comme un fondu au noir entre deux contenus consécutifs.

Dans ce contexte, il est prévu par l'invention que lesdites métadonnées contiennent des informations concernant l'application desdites transformations lors du montage du contenu multimédia final. En général, ces informations émanent d'un participant particulier, l'initiateur de la création par exemple, jouant le rôle de réalisateur du contenu final.

Par ailleurs, selon l'invention, les terminaux sont aptes à recevoir des messages d'état du système.

En particulier, lesdits messages d'état contiennent des informations sur la disponibilité du contenu multimédia final. Cette disposition permet aux participants de savoir que le contenu multimédia final est disponible et d'effectuer une demande de téléchargement ou de lecture en transit (« streaming ») du contenu final auprès du système.

Selon une caractéristique avantageuse de l'invention, les terminaux comportent une interface de communication. Cette interface permet au participant utilisant un terminal d'émettre des contenus élémentaires et des métadonnées et de recevoir des messages d'état.

Dans le cas où lesdits messages d'état concernent le dernier contenu multimédia élémentaire émis pour une séquence multimédia par l'ensemble des terminaux, ladite interface comporte un indicateur de réception dudit dernier contenu multimédia élémentaire. Il est même prévu que ladite interface est apte à jouer ledit dernier contenu multimédia élémentaire, si l'utilisateur participant le souhaite.

Selon l'invention, lesdits messages d'état contiennent des alertes concernant la saisie de contenus multimédia élémentaires par les terminaux. Ces alertes indiquent par exemple à chaque participant son rôle et le type d'action attendue de sa part.

L'invention concerne aussi une plateforme de réalisation pour la création collaborative à distance d'un contenu multimédia final réalisé à partir d'une pluralité de contenus multimédia élémentaires, caractérisée en ce que ladite plateforme comprend :

- un module de génération d'au moins un scénario pour ledit contenu multimédia final, ledit scénario étant composé d'une structure arborescente d'au moins une séquence multimédia,
- un étage d'émission/réception pour la réception de contenus élémentaires émis par une pluralité de terminaux, un contenu élémentaire étant constitué de données multimédia et de métadonnées comprenant un indicateur concernant une séquence multimédia à laquelle se rapporte ledit contenu multimédia élémentaire, et ledit étage d'émission/réception étant apte à effectuer la décomposition des contenus élémentaires et à extraire ledit l'indicateur desdites métadonnées,
- un serveur de réalisation dudit contenu multimédia final par traitement de contenus multimédia élémentaires émis par des terminaux, conformément à ladite structure arborescente et selon une loi de montage donnée.

L'invention concerne encore un procédé de réalisation et un programme d'ordinateur mettant en oeuvre ce procédé.

La plateforme, le procédé et le programme d'ordinateur présentent des avantages analogues à ceux du système présentés plus haut.

La description qui va suivre en regard des dessins annexés, donnés à titre d'exemples non limitatifs, fera bien comprendre en quoi consiste l'invention et comment elle peut être réalisée.

La figure 1 est un schéma simplifié d'un système conforme à l'invention.

La figure 2 est un schéma détaillé du système de la figure 1.

La figure 3 est un schéma d'une structure arborescente de séquences multimédia.

La figure 4 est un schéma montrant la répartition des contenus multimédia élémentaires dans la structure arborescente de la figure 3.

La figure 5 est un schéma de transformations appliquées aux contenus élémentaires de la figure 4.

La figure 6 est un diagramme de la phase d'initialisation de la réalisation d'un contenu multimédia final.

La figure 7a est un diagramme d'émission d'un contenu multimédia élémentaire en phase nominale de réalisation.

La figure 7b est un diagramme de réception et de traitement du contenu multimédia élémentaire émis selon la figure 7a.

La figure 8 est un diagramme de la phase finale de réalisation et de mise à disposition du contenu multimédia final.

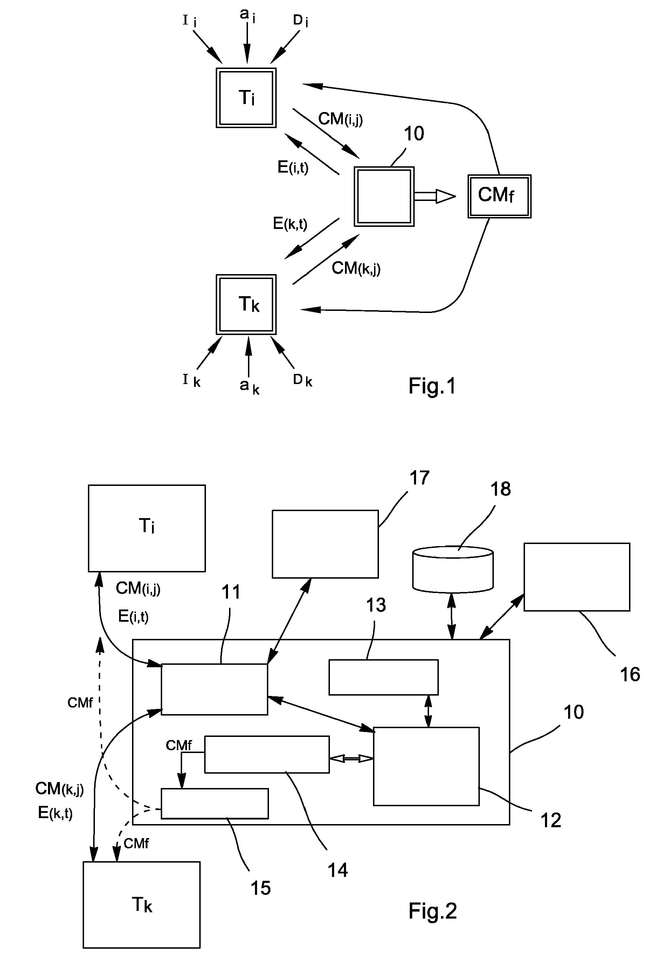

Sur la **figure 1** est représenté un système de communication entre des terminaux Ti, Tk et une plateforme 10 destinée à la création collaborative à distance d'un contenu multimédia final CMf à partir d'une pluralité de contenus multimédia élémentaires fournis à la plateforme 10 par les terminaux Ti, Tk.

Un contenu multimédia élémentaire sera noté CM(i,j) et représente la jième contribution, ou jième envoi, du terminal Ti pour la réalisation du contenu final CMf.

Un contenu élémentaire CM(i,j) peut être décomposé sous la forme :

$$CM(i,j) = I(i,j) + a(i,j) + D(i,j)$$

où $I(i,j)$ est le jième flux image émis par Ti, $a(i,j)$ le jième flux son émis par Ti et $D(i,j)$ des métadonnées associées à ces flux.

En retour, les terminaux Ti, Tk peuvent recevoir des messages concernant l'état du système. Un tel message d'état, noté $E(i,t)$, contient des informations concernant le système à l'instant t, ces informations étant remontées au terminal Ti.

On utilisera dans la suite de la description le terme « partie » pour désigner l'ensemble des échanges entre les terminaux Ti, Tk et le système pour la réalisation d'un contenu multimédia final CMf.

La **figure 2** fait apparaître le contenu détaillé de la plateforme 10 de réalisation. Sur cette figure, on peut voir la présence d'un module 13 apte à générer un scénario composé d'une pluralité de séquences multimédia. Ce scénario est décidé à l'avance, en début de partie, par un ou plusieurs participants. La constitution du scénario en séquences initialement définie peut cependant être modifiée en cours de partie au niveau du module 13.

Par exemple, des participants peuvent décider de collaborer à la réalisation d'un court-métrage à l'occasion d'un mariage, chaque participant disposant d'un terminal. Dans ce cas, le scénario sera le scénario « mariage » référencé dans le module 13 de génération de scénarios. A ce scénario « mariage », le générateur associe une pluralité de séquences désignées : « arrivée de la mariée », « sortie de la mairie », « vin d'honneur », « repas », etc. Les participants sont chargés au cours de la partie d'approvisionner en contenus multimédia élémentaires ces différentes séquences ou d'ajouter de nouvelles séquences.

En fin de partie, le traitement des séquences par le système de l'invention fournira le contenu multimédia final CMf constituant le court-métrage à réaliser.

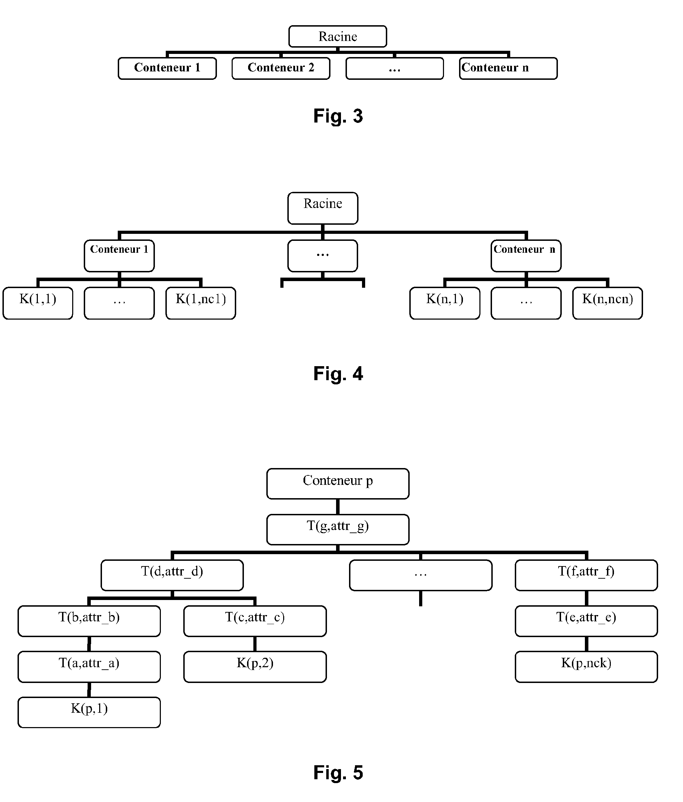

Comme le montre la **figure 3**, les contenus multimédia élémentaires CM(i,j) sont gérés par l'intermédiaire d'une structure de données arborescente depuis la phase d'initialisation de la partie jusqu'au montage final des séquences et la diffusion du contenu multimédia final CMf.

Cette structure de données arborescente est créée dans le module 13 de génération lors de la phase d'initialisation comme un arbre comportant un noeud racine, correspondant au scénario « mariage » par exemple, et un certain nombre de noeuds fils appelés conteneurs, correspondant aux différentes séquences du scénario racine.

A titre d'exemple, la structure de données arborescente montrée sur la figure 3 peut être réalisée en langage XML.

Un conteneur est chargé de regrouper les contenus élémentaires CM(i,j) relatifs à une même séquence. L'utilisation de conteneurs permet donc d'opérer une structuration des contenus multimédia de la manière représentée à la **figure 4**.

Lorsqu'un terminal Ti fournit un contenu élémentaire CM(i,j), les métadonnées correspondantes $D(i,j)$ comprennent un indicateur d'une séquence, ou conteneur, qui lui correspond. Cet indicateur peut être le numéro p du conteneur associé au contenu. Dans l'exemple choisi, p est un nombre compris entre 1 et n. On peut donc renuméroter les contenus élémentaires CM(i,j) sous la forme K(p,q), K(p,q) représentant le qième contenu multimédia élémentaire d'un container p . Bien entendu, la relation entre les K(p,q) et les CM(i,j) est bijective.

L'indicateur peut être également un libellé associé au conteneur, comme par exemple « sortie de la mairie » dans le scénario « mariage » évoqué plus haut, étant entendu que le système est capable de faire des rapprochements sémantiques et reconnaître l'indicateur « mairie » comme se rapportant au conteneur « sortie de la mairie ».

Cependant un indicateur peut aussi ne pas être associé à un conteneur d'une séquence existante. Dans ce cas, le système est apte à détecter cette nouvelle séquence et crée un nouveau conteneur dans la structure arborescente. Toujours dans le cadre du scénario « mariage », un participant peut être amené à créer un contenu multimédia concernant les petites filles d'honneur et lui associer comme indicateur le libellé « petites filles d'honneur » inexistant dans l'arborescence en tant que conteneur. En réponse, le système prendra en compte cette nouvelle séquence en ajoutant le conteneur « petites filles d'honneur » à l'arborescence déjà existante.

De plus, le système conforme à l'invention propose la possibilité de modifier les contenus multimédia élémentaires et la manière dont ils seront combinés pour produire le contenu final CMf. Pour cela, il est fait appel à l'application de transformations T aux contenus multimédia.

Une transformation T s'applique à un ou plusieurs contenus multimédia élémentaires et a pour résultat un autre contenu multimédia modifié. L'application des transformations T à la structure arborescente de la figure 4 conduit à la création de noeuds supplémentaires, comme le montre la figure 5.

Une transformation est définie par deux arguments, à savoir son type a, b, c,...et ses paramètres attr_a, attr_b, att_c,... Concernant le type, on peut donner comme exemples : la réduction du son, le passage en noir et blanc, un ralenti, l'insertion d'un sous-titre, ou encore le fondu au noir entre deux contenus différents. Les paramètres sont par exemple -10 dB pour le type réduction du son. Dans ce cas, la transformation T(a, attr_a) se comprend comme « réduire le son de -10dB ».

Le système gère en mémoire une bibliothèque de conversion vidéo et des utilitaires de transformations. A titre d'exemple, la bibliothèque vidéo ffmpeg peut être utilisée par le système en tant que bibliothèque de conversion multimédia.

C'est la structure de la **figure 5** qui reflète l'état de l'ensemble des contenus multimédia et qui va être exploitée comme loi de montage pour la génération du contenu final CMf.

On va maintenant décrire en détail le système selon l'invention en référence à la figure 2.

Chaque terminal Ti, Tk d'un utilisateur participant à la partie comprend une application capable de communiquer avec le la plateforme 10, c'est à dire émettre des contenus élémentaires CM(i,j) et recevoir en retour des messages d'état E(i,t), notamment les contenus multimédias finaux créés par l'intermédiaire de la plateforme 10.

La communication entre les terminaux et la plateforme 10 peut être synchrone ou asynchrone.

Pour des téléphones mobiles, la communication asynchrone entre un terminal et la plateforme peut être assurée par le client MMS du terminal. En environnement PC, le client de messagerie peut assurer cette fonction.

Une application (Java, Symbian, Windows...) est capable d'établir une communication synchrone avec la plateforme que le terminal soit un téléphone mobile ou un PC.

Par ailleurs, les terminaux peuvent être équipés d'une interface de communication. En particulier, la restitution du contenu final CMf sur le terminal peut se faire à l'aide de lecteurs (« players ») multimédia qui sont de plus en plus répandus non seulement en environnement PC mais aussi sur les terminaux mobiles.

L'étage 11 d'émission/réception assure la communication entre la plateforme 10 et les terminaux Ti.

En particulier, cet étage 11 effectue la décomposition en I(i,j), a(i,j) et D(i,j) des contenus élémentaires CM(i,j) l'extraction de l'identifiant i de l'utilisateur et de l'indicateur de la contribution, ainsi que des informations relatives au contexte de la communication.

Inversement, l'étage 11 assure la transmission depuis la plateforme 10 vers les terminaux Ti des informations pertinentes lors du déroulement de la partie, notamment les messages d'état E(i,t).

De manière pratique, les contenus MMS envoyés par un terminal mobile ou des fichiers vidéo envoyés en pièces jointes à des courriers électroniques peuvent être analysés par des langages de scripts communs (Perl, php, python...) afin de réaliser la décomposition des contenus CM(i,j).

La communication de la plateforme 10 vers les terminaux Ti peut se faire de manière asynchrone par MMS, SMS ou courrier électronique, ou être gérée de manière synchrone en relation avec une application dédiée des terminaux.

L'unité centrale 12 est l'organe de gestion de l'ensemble du système. Sa fonction est de coordonner les actions des différents composants, de l'initialisation d'une partie jusqu'à la génération du contenu final CMf en passant par la collecte des contenus élémentaires CM(i,j).

Pour remplir cette fonction, l'unité centrale 12 assure trois fonctions principales :

    a) L'interprétation des contenus élémentaires CM(i, j) préalablement décomposés en I(i,j), a(i,j) et D(i,j) par l'étage 11 pour l'exécution d'actions appropriées en relation avec les autres composants.
    b) L'envoi des messages E(i,t) vers les terminaux Ti correspondant à l'état de la partie afin de communiquer les instructions nécessaires au bon déroulement de celle-ci.
    c) La communication avec les autres composants de la plateforme 10.

Dans la fonction a), l'unité centrale 12 est un système d'interprétation et de gestion des contenus CM(i,j) afin de sélectionner les actions appropriées en fonction de la décomposition en I(i,j), a(i,j) et D(i,j), notamment :

- initialisation d'une partie,
- fin d'une partie,
- insertion d'une contribution j,
- édition d'une contribution j,
- lancement de la génération du contenu final CMf.

Dans la fonction b), l'unité centrale 12 transmet les informations pertinentes aux terminaux Ti afin d'animer la partie, entre autres en informant les utilisateurs de son déroulement, notamment :

- notification de lancement de partie,
- notification d'arrivée de nouvelles contributions,
- notification de fin de partie,
- notification de réalisation du contenu final CMf,
- notification de diffusion du contenu final CMf.

Dans la fonction c), l'unité centrale 12 interagit avec les autres composants de la plateforme 10 en fonction des contenus élémentaires CM(i,j) et des messages d'état E(i,t) :

- avec le générateur 13 pour la création d'un scénario,
- avec une mémoire 16 pour le stockage de nouvelles contributions,
- avec le module 14 de réalisation et l'étage 15 de diffusion en fin de partie pour la génération et la distribution du contenu final CMf.

L'unité centrale 12 peut être réalisée à l'aide d'un environnement de programmation du marché (Java, C++, perl, php...) incluant des modules de client/serveur et fonctionner par l'intermédiaire d'API avec les autres composants.

Comme cela a été expliqué plus haut, le module 13 de génération de scénarios crée une structure arborescente analogue à celle de la figure 3 qui sera utilisée ensuite durant toute la partie ou enrichie en cours de partie, en fonction d'une donnée, appelée indicateur, contenue dans les métadonnées D(i,j) et transmise par les terminaux Ti à la plateforme 10.

Le module 14 de réalisation assure la génération du contenu multimédia final CMf à partir de la structure de données arborescente décrite à la figure 5, par un parcours en profondeur de cette structure.

Pour ce faire, le module 14 utilise des fonctions de la bibliothèque de conversion vidéo et des utilitaires de transformations. Ces fonctions peuvent être combinées, ce qui rend possible l'application successive de transformations aux niveaux ascendants de la structure de données arborescente.

L'étage 15 assure la diffusion vers les terminaux Ti du contenu final CMf généré par le module 14 de réalisation. Cette diffusion peut être effectuée au moyen d'une plateforme de lecture en transit (« streaming ») Packet video pour la distribution de contenus vers des terminaux mobiles.

Le système 17 assure la modération des contenus élémentaires CM(i,j) envoyés à la plateforme 10 et du contenu final CMf généré. Son activation lors du déroulement d'une partie dépend de la politique éditoriale du gestionnaire des parties et peut être optionnelle. Cette fonction peut être assurée par un terminal Ti particulier qui visualise l'ensemble des contenus élémentaires CM(i,j) et qui en valide l'intégration dans le contenu final CMf.

Pour son fonctionnement, le système dispose d'un espace mémoire 16 suffisant pour réaliser l'ensemble de traitements nécessaires au bon déroulement d'une partie.

Cette mémoire système 16 gère notamment :

- les scénarios en relation avec le module 13,
- les contenus élémentaires CM(i,j),
- la bibliothèque des transformations,

- le ou les contenus finaux CMf.

La base 18 de données pour la gestion des CM (i,j) s'appuie sur un modèle XML pour la description de la structure de données arborescente.

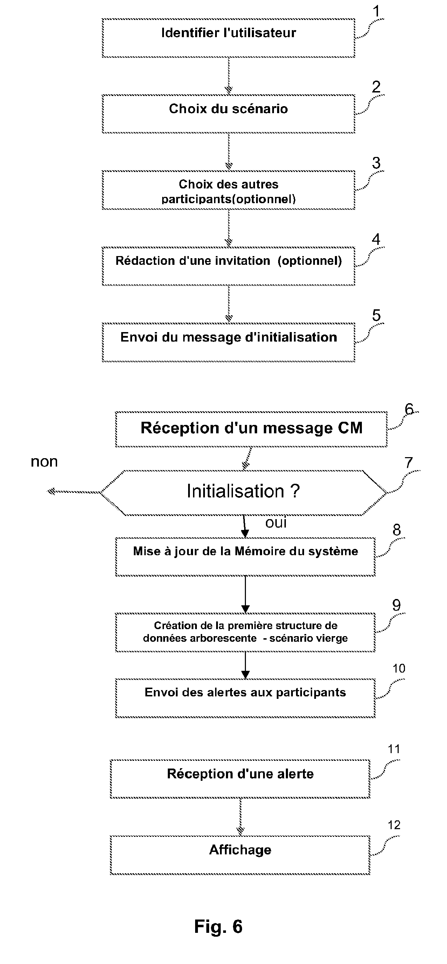

Le déroulement d'une partie entre participants contributeurs conduisant à la réalisation collective d'un contenu multimédia final va maintenant être décrite en regard des figures 6 à 8.

La phase d'initialisation de la partie est schématisée sur le diagramme de la **figure 6**.

Pour initialiser une partie, un utilisateur doit d'abord composer un message destiné à la plateforme 10. Cet utilisateur peut être un des participants ou bien l'administrateur du service de réalisation de contenus.

Le message comporte les champs suivants :

- une identification de l'utilisateur. Il peut d'agir d'un numéro de téléphone d'un terminal mobile ou d'un identifiant sur un PC.
- le type de scénario,
- éventuellement, une identification des autres participants : par exemple leurs numéros de téléphone mobile.

Pour connaître les différents types de scénario disponibles au niveau du module 13, l'utilisateur peut consulter un site Web lié au service depuis son mobile, un PC ou encore être informé par une publicité.

Le premier utilisateur peut éventuellement rajouter un message personnalisé à destination des autres participants.

Une fois le message composé, il est envoyé vers l'étage 11 d'émission/réception par le terminal.

Lorsqu'il reçoit un message, l'étage 11 d'émission/réception en extrait les données qu'il transmet à l'unité centrale 12. Cette dernière commence par identifier le type du message qui lui est transmis. Dans l'exemple traité ici, il s'agit d'un message d'initialisation.

L'unité centrale 12 crée alors un identifiant unique à associer à cette partie. A l'aide de la mémoire 16, elle stocke les informations nécessaires au bon déroulement de la partie, notamment les divers identifiants.

Ensuite, l'unité centrale 12 fait appel au module 13 pour la création de la structure de données arborescente qui décrit le scénario. Pour cela, il envoie le type de scénario contenu dans le message d'initialisation et éventuellement les identifiants des participants.

Enfin, si le message d'initialisation contient des identifiants de participants, l'unité centrale 12 émet une demande à l'étage 11 afin qu'il envoie un message d'alerte à l'ensemble des participants pour les informer du démarrage de la partie : Cette demande est constituée de :

- l'identifiant de la partie,
- les identifiants des participants,
- un message d'information pouvant contenir du texte, des images, et du son.

L'étage 11 d'émission/réception compose le message pour chaque participant et effectue l'envoi.

Suivant le type de scénario choisi pour la partie, le message d'information peut être personnalisé : par exemple, il indiquera à chaque participant le style de prise de vue qu'il doit tourner.

L'identifiant de partie peut aussi être diffusé aux autres participants par divers moyens d'informations, comme l'affichage ou la publicité audio/vidéo indépendamment du service lui-même.

Le terminal destinataire reçoit le message d'information et présente à l'utilisateur les données qui y sont contenues comme :

- la règle du jeu,
- les séquences possibles du scénario,
- l'identifiant de partie à utiliser pour échanger avec l'unité centrale 12.

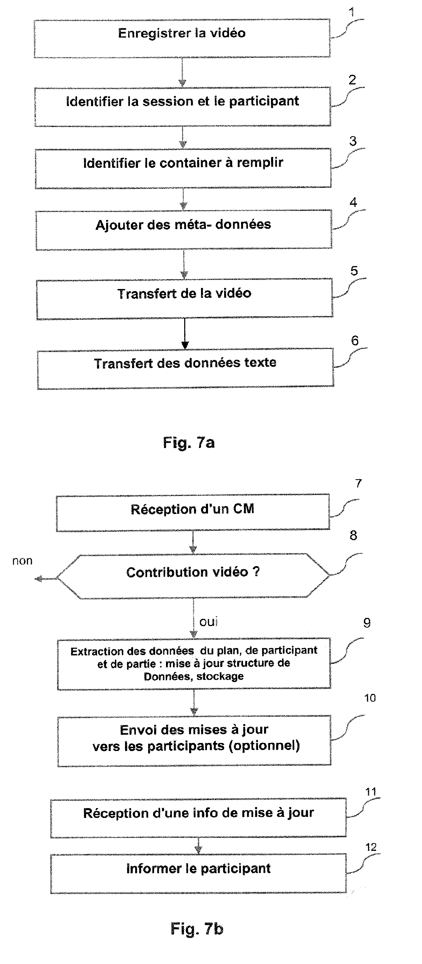

La **figure 7a** décrit en phase nominale comment un participant peut apporter une contribution à la partie sous la forme d'un contenu multimédia élémentaire CM(i,j) du type vidéo.

Pour participer à une partie, le participant doit d'abord enregistrer un contenu multimédia, une vidéo dans le cas envisagé ici. Cet enregistrement peut s'effectuer de deux manières:

- soit "en direct", par exemple avec un appareil photo numérique intégré à un terminal mobile,
- soit en important un fichier vidéo enregistré au préalable, présent dans le terminal mobile.

Puis, l'utilisateur doit renseigner les champs des métadonnées D(i,j) nécessaires au traitement de sa contribution, c'est-à-dire:

- l'identifiant de la partie,
- un identifiant indicateur du conteneur, ou séquence, à remplir.

L'utilisateur peut aussi envoyer dans les métadonnées D(i,j) des informations propres à influencer le montage de la vidéo finale comme par exemple :

- supprimer le son,
- une note d'appréciation,
- une description,
- un sous-titre.

Le terminal ajoute automatiquement à la vidéo des données concernant l'heure de prise de vue, le format, etc.

Un message contenant uniquement l'identifiant de partie et un identifiant de prise de vue peut être envoyé par la suite pour mettre à jour les données de montage de la prise de vue spécifiée.

Ensuite, les données audio/vidéo sont transférées vers la plateforme 10.

La **figure 7b** décrit la réception et le traitement d'un contenu élémentaire CM(i,j) vidéo.

L'unité centrale 12 identifie le message reçu comme une contribution vidéo, stocke les données audiovisuelles et les métadonnées associées dans un espace de la mémoire système 16, et enfin met à jour la structure de données.

Si le système 17 de modération est activé, la contribution est alors stockée à l'état inactif tant que le modérateur ne l'a pas activée. Une contribution inactive ne peut pas être utilisée pour générer le contenu final CMf.

Au cours de cette étape, lorsqu'un participant a complété un conteneur par une nouvelle contribution, un indicateur de réception, ou vignette, représentant la prise de vue tournée est extrait et est présenté immédiatement aux autres participants sur leur interface de communication dans un message E(i,t), accompagnée des informations utiles associées comme l'identifiant de la prise de vue. S'il le désire, un participant peut visionner la totalité cette nouvelle prise de vue vidéo en activant le menu correspondant sur son interface de communication. Ce même participant a également la possibilité d'émettre des commentaires ou des compléments au sujet de la contribution qu'il vient de visionner dans des métadonnées D(i,j) qu'il peut envoyer à la plateforme 10. Ces données peuvent influencer la loi de montage.

Si la contribution provient d'un nouveau participant, alors l'unité centrale 12 stocke l'information de manière à pouvoir l'alerter de la fin de partie.

Suivant le type de scénario choisi, aucun message d'information n'est envoyé ou un message est envoyé seulement à un participant ou un message collectif est envoyé. Cela permet de séquencer le processus de remplissage : les participants envoient leur contribution les uns à la suite des autres par exemple ou au contraire tous en même temps.

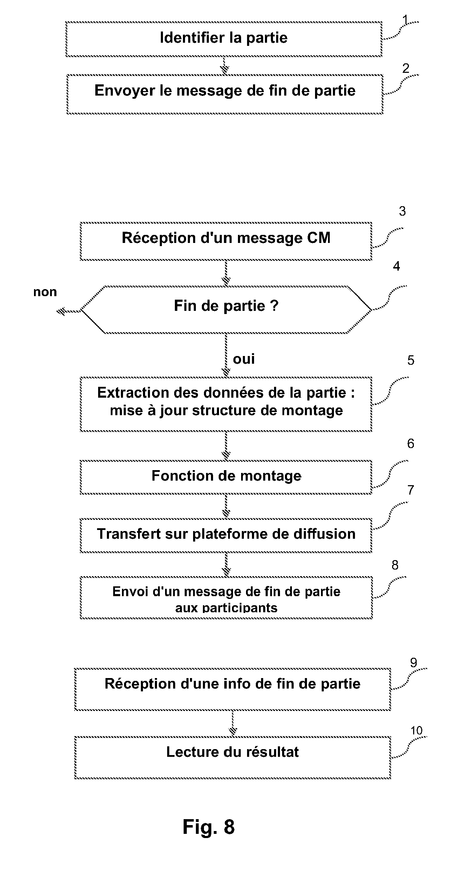

La **figure 8** décrit les étapes qui permettent en fin de partie de visualiser le contenu multimédia final CMf monté à partir des différentes contributions.

En fonction du scénario choisi, l'initiateur de la partie peut décider à tout moment d'y mettre fin ou bien il peut attendre que l'ensemble des containers soit complété.

Pour finir la partie et visionner le contenu final, l'utilisateur doit identifier une partie puis envoyer un message contenant l'ordre de procéder au montage.

L'unité centrale 12 reçoit l'ordre de terminer la partie. Elle met à jour la base de données et la structure de données arborescente puis transmet l'information au module 14 de réalisation. Ce dernier applique la loi de montage correspondant à la structure arborescente du scénario choisi.

Lorsque le contenu final CMf est obtenu, le module 14 le transfère vers l'étage 15 de diffusion puis informe l'unité centrale 12 que les participants peuvent consulter le résultat.

L'unité centrale 12 compose un message d'état E(i,t) qui est transmis au terminal Ti par l'étage 11 d'émission/réception. Ce message contient :

- un résumé de la partie,
- un pointeur vers le résultat.

Une fois le contenu final terminé, les participants reçoivent une alerte pour les inviter à consulter le résultat. La consultation dépend de la plateforme de diffusion et du terminal : téléchargement ou lecture en transit (« streaming »).

## Revendications

1. Système de communication pour la création collaborative à distance d'un contenu multimédia final (CMf) réalisé à partir d'une pluralité de contenus multimédia élémentaires (CM(i,j)), **caractérisé en ce que** ledit système comprend :

   - un module (13) de génération d'au moins un scénario pour ledit contenu multimédia final, ledit scénario étant composé d'une structure arborescente d'au moins une séquence multimédia,
   - une pluralité de terminaux (Ti), un terminal étant apte à émettre au moins un contenu multimédia élémentaire (CM(i,j)) constitué de données multimédia (I(i,j), a(i,j)) et de métadonnées (D(i,j)) comprenant un indicateur concernant une séquence multimédia à laquelle se rapporte ledit contenu multimédia élémentaire,
   - un serveur (14) de réalisation dudit contenu multimédia final (CMf) par traitement des contenus multimédia élémentaires (Ctvt(i,j)) émis par les terminaux (Ti), conformément à ladite structure arborescente et selon une loi de montage donnée.

2. Système selon la revendication 1, **caractérisé en ce que** ledit indicateur concerne une séquence multimédia préalablement existante dans la structure arborescente.

3. Système selon la revendication 1, **caractérisé en ce que** ledit indicateur concerne une séquence multimédia nouvelle, ledit module (13) de génération étant apte à ajouter ladite séquence à la structure arborescente.

4. Système selon l'une quelconque des revendications 1 à 3, **caractérisé en ce que** ladite loi de montage consiste en une concaténation des contenus multimédia élémentaires d'une même séquence de la structure arborescente.

5. Système selon l'une quelconque des revendications 1 à 3, **caractérisé en ce que** ladite loi de montage consiste en une sélection d'un seul contenu multimédia élémentaire dans une séquence de la structure arborescente.

6. Système selon l'une quelconque des revendications 1 à 3, **caractérisé en ce que** ladite loi de montage consiste en l'application de transformations aux contenus multimédia élémentaires d'une même séquence de la structure arborescente.

7. Système selon la revendication 6, **caractérisé en ce que** lesdites métadonnées (D(i,j)) contiennent des informations concernant l'application desdites transformations lors du montage du contenu multimédia final (CMf).

8. Système selon l'une quelconque des revendications 1 à 7, **caractérisé en ce que** lesdites métadonnées (D(i,j)) contiennent des informations concernant la constitution de ladite loi de montage.

9. Système selon l'une quelconque des revendications 1 à 8, **caractérisé en ce qu'**il comprend un système (17) de modération des contenus multimédia élémentaires (CM(i,j)) émis par les terminaux (Ti).

10. Système selon l'une quelconque des revendications 1 à 9, **caractérisé en ce que** les terminaux comportent une interface de communication qui comporte un indicateur de réception dudit dernier contenu multimédia élémentaire reçu par une plateforme (10) de réalisation du contenu multimédia final.

11. Terminal pour la pour la création collaborative à distance d'un contenu multimédia final (CMf) réalisé à partir d'une pluralité de contenus multimédia élémentaires (CM(i,j)), **caractérisé en ce que** ledit terminal (Ti) est apte à émettre au moins un contenu multimédia élémentaire (CM(i,j)) constitué de données multimédia (I(i,j), a(i,j)) et de métadonnées (D(i,j)) comprenant un indicateur concernant une séquence multimédia à laquelle se rapporte ledit contenu multimédia élémentaire dans une structure arborescente constituant un scénario pour ledit contenu multimédia final.

12. Plateforme de réalisation pour la création collaborative à distance d'un contenu multimédia final (CMf) réalisé à partir d'une pluralité de contenus multimédia élémentaires (CM(i,j)), **caractérisée en ce que** ladite plateforme (10) comprend :

   - un module (13) de génération d'au moins un scénario pour ledit contenu multimédia final, ledit scénario étant composé d'une structure arborescente d'au moins une séquence multimédia,

- un étage (11) d'émission/réception pour la réception de contenus élémentaires CM(i,j) émis par une pluralité de terminaux (Ti), un contenu élémentaire étant constitué de données multimédia (I(i,j), a(i,j)) et de métadonnées (D(i,j)) comprenant un indicateur concernant une séquence multimédia à laquelle se rapporte ledit contenu multimédia élémentaire, et ledit étage (11) d'émission/réception étant apte à effectuer la décomposition des contenus élémentaires CM(i,j) et à extraire ledit l'indicateur desdites métadonnées (D(i,j)),

- un serveur (14) de réalisation dudit contenu multimédia final (CMf) par traitement de contenus multimédia élémentaires (CM(i,j)) émis par des terminaux (Ti), conformément à ladite structure arborescente et selon une loi de montage donnée.

13. Procédé de réalisation pour la création collaborative à distance d'un contenu multimédia final (CMf) réalisé à partir d'une pluralité de contenus multimédia élémentaires (CM(i,j)), **caractérisé en ce que** ledit procédé comprend des étapes de :

- génération d'au moins un scénario pour ledit contenu multimédia final, ledit scénario étant composé d'une structure arborescente d'au moins une séquence multimédia,

- réception de contenus élémentaires CM(i,j) émis par une pluralité de terminaux (Ti), un contenu élémentaire étant constitué de données multimédia (I(i,j), a(i,j)) et de métadonnées (D(i, j)) comprenant un indicateur concernant une séquence multimédia à laquelle se rapporte ledit contenu multimédia élémentaire,

- décomposition des contenus élémentaires CM(i,j) et extraction dudit indicateur desdites métadonnées (D(i,j)),

- réalisation dudit contenu multimédia final (CMf) par traitement de contenus multimédia élémentaires (CM(i,j)) émis par des terminaux (Ti), conformément à ladite structure arborescente et selon une loi de montage donnée.

14. Programme d'ordinateur comportant des instructions pour mettre en oeuvre le procédé selon la revendication 13 lorsqu'il est exécuté sur un ordinateur.

Fig.1

Fig.2

Racine

Conteneur 1     Conteneur 2     ...     Conteneur n

**Fig. 3**

Racine

Conteneur 1     ...     Conteneur n

K(1,1)     ...     K(1,nc1)     K(n,1)     ...     K(n,ncn)

**Fig. 4**

Conteneur p

T(g,attr_g)

T(d,attr_d)     ...     T(f,attr_f)

T(b,attr_b)     T(c,attr_c)     T(e,attr_e)

T(a,attr_a)     K(p,2)     K(p,nck)

K(p,1)

**Fig. 5**

Fig. 6

Enregistrer la vidéo — 1

Identifier la session et le participant — 2

Identifier le container à remplir — 3

Ajouter des méta- données — 4

Transfert de la vidéo — 5

Transfert des données texte — 6

**Fig. 7a**

Réception d'un CM — 7

Contribution vidéo ? — 8

non

oui

Extraction des données du plan, de participant
et de partie : mise à jour structure de
Données, stockage — 9

Envoi des mises à jour
vers les participants (optionnel) — 10

Réception d'une info de mise à jour — 11

Informer le participant — 12

**Fig. 7b**

Fig. 8

**Office européen**
**des brevets**

# RAPPORT DE RECHERCHE EUROPEENNE

Numéro de la demande

EP 07 10 9147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FONSECA J ET AL: "BitTorrent Protocol -- BTP/1.0" INTERNET CITATION, [Online] avril 2005 (2005-04), pages 1-26, XP002418253 Extrait de l'Internet: URL:http://jonas.nitro.dk/bittorrent/bittorrent-rfc.html> [extrait le 2007-02-02] | 1,2,4, 8-14 | INV. G06Q10/00 H04L29/08 |
| A | * abrégé * * alinéa [01.3] - alinéa [01.4] * * alinéa [0003] * * alinéa [0004] * * alinéa [06.3] * ----- | 3,5-7 | |
| X | JUMPCUT: "Quick Guide"[Online] 16 mai 2006 (2006-05-16), pages 1-9, XP002423019 INTERNET Extrait de l'Internet: URL:http://web.archive.org/web/20060516042328/http://www.jumpcut.com/quickGuide/quickGuide_upload> [extrait le 2007-03-02] | 1-6,8-14 | |
| A | * le document en entier * ----- | 7 | DOMAINES TECHNIQUES RECHERCHES (IPC) G06Q H04L |
| X | EYESPOT: "Tour"[Online] 6 mai 2006 (2006-05-06), pages 1-13, XP002423020 Internet Extrait de l'Internet: URL:http://web.archive.org/web/20060506085020/http://eyespot.com/tour/> [extrait le 2007-03-02] | 1-6,8-14 | |
| A | * le document en entier * -/-- | 7 | |

Le présent rapport a été établi pour toutes les revendications

| Lieu de la recherche | Date d'achèvement de la recherche | Examinateur |
|---|---|---|
| Munich | 31 août 2007 | Jeampierre, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen
des brevets**

**RAPPORT DE RECHERCHE EUROPEENNE**

Numéro de la demande

EP 07 10 9147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| | -& PODCASTING MICHIGAN: "SXSW Best of Show: eyespot"[Online] 18 mars 2006 (2006-03-18), pages 1-1, XP002423021 Internet Extrait de l'Internet: URL:http://www.podcastingmichigan.com/2006/03/18/sxsw-best-of-show-eyespot/> [extrait le 2007-03-02] * le document en entier * ----- | | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 31 août 2007 | Jeampierre, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................................................
& : membre de la même famille, document correspondant

EPO FORM 1503 03.82 (P04C02)